# EUROPEAN PATENT APPLICATION

(11) **EP 4 830 948 A2**
(43) Date of publication of application: **28.10.2026**
(21) Application number: 26204868.9
(22) Date of filing: 20.05.2024
(51) Int. Cl.: B60G 17/017

(54) **TRANSFER VEHICLE, SYSTEM AND METHOD FOR LOADING A TRANSFERABLE OBJECT INTO A CARGO SPACE OF A TRANSFER VEHICLE**

(30) Priority: 06.07.2023 FI 20235799
(62) Document number(s) of the earlier application(s) in accordance with Art. 76 EPC: 24742982.2 / 4 739 542
(71) Applicant: Sleipner Group Oy, 40100 Jyväskylä (FI)
(72) Inventor: HÖYLÄ, Teijo, 40100 Jyväskylä (FI); MIETTINEN, Joona, 40100 Jyväskylä (FI)
(74) Representative: Kespat Oy

(57) **Abstract**

The invention relates to a transfer vehicle (10) for transferring a transferable object weighing 2-50 t, preferably 3-30 t, wherein the transfer vehicle includes
- a frame
- a cargo space (40) attached to the frame for a transferable object (20) to be loaded onto the transfer vehicle (10),
- wheels (32) suspended in the frame for supporting the frame on a substrate (100),
- lifting means (35) for lowering the cargo space (40) in order to transfer the transferable object (20) into the cargo space (40),

wherein the suspension of a wheel (32) comprises
- a supporting arm (60), wherein the wheel (32) is attached in an articulated manner to a first end (61) of the supporting arm (60), and wherein a second end (62) of the supporting arm (60) is attached in an articulated manner to the frame,
- a height adjustment cylinder (70), wherein a first end (71) of the height adjustment cylinder (70) is attached in an articulated manner to the frame,
- a damping element (80), wherein a first end (81) of the damping element (80) is attached in an articulated manner to the first end (61) of the supporting arm (60),
- a linking element (90) with a first support point (91), a second support point (92) and a third support point (93),

wherein the second end (72) is attached in an articulated manner to the first support point (91), the second end (82) is attached in an articulated manner to the second support point (92), and the linking element (90) is attached in an articulated manner by the third support point (93) to the supporting arm (60).

The invention also relates to a system and to a method for loading a transferable object (20) into a cargo space (40) of a transfer vehicle (10).

## Description

The invention relates to a transfer vehicle for transferring a transferable object weighing 2-50 t, preferably 3-30 t, wherein the transfer vehicle includes a frame, a cargo space attached to the frame for the transferable object to be loaded onto the transfer vehicle, wheels suspended in the frame for supporting the frame on a substrate, and lifting means for lowering the cargo space in order to transfer the transferable object into the cargo space. The invention also relates to a system and to a method for loading a transferable object into a cargo space of a transport vehicle.

In other words, the invention preferably relates to a transfer vehicle used in the mining industry for moving heavy objects.

The general drive to reduce industrial carbon emissions has led to a growing trend to electrify mining machinery. However, it is often not economically viable to build an electricity grid in mining areas, so that vehicles and other mobile equipment in mining areas are often battery-powered. For example, Epiroc manufactures electric drill rigs which use a lightweight driving battery pack for short transfers from one drillhole to another and a larger working battery pack connected by cable to the drill rig for longer drilling operations.

When a battery pack runs out, the empty battery pack must be replaced with a charged battery pack so that work can continue essentially uninterrupted. The replacement of battery packs currently requires either the drill rig to be transferred to a battery-pack charging station, which can be located a significant distance away from the drill rig, there generally being a plurality of drill rigs at a mine or quarry, or a second charged battery pack to be transferred to the drill rig. A battery charging point can be located far away from a drilling area so that it can become necessary to transport a plurality of charged battery packs daily from the charging point to the drilling area to await use. It accordingly becomes necessary to transport empty batteries from the drilling area to the charging point.

The capacity of, for example, a working battery pack can be dimensioned for the power needs of one workday, for example at 1600 kWh, so that in terms of its physical dimensions the battery pack can be the size of a 3-foot shipping container and can weigh several tonnes. A problem is thus the transportation of the battery packs between the charging point and the work area, as the heavy battery pack has to be lifted into the cargo space of the transfer vehicle, which currently requires the use of a heavy crane and is also a very slow operation.

In addition to batteries, numerous other heavy and large transferable objects are used in the mining industry, which are hard and slow to move with current technology. Such transferable objects include, for example pumping stations, storage containers and light towers.

In addition, autonomous vehicles are becoming more and more common in mining areas, so that it is necessary to load a battery pack, or any other transferable object in a mining area, into the cargo area of a transfer vehicle without the presence of a human being. In this case, cranes or other solutions according to the prior art for loading a heavy static object into the cargo space of a transfer vehicle require machine vision or other very complex solutions to work.

Transfer vehicles suitable for moving heavy objects according to the prior art typically do not comprise any kind of damping element.

The object of the invention is to provide a transfer vehicle, a system and a method by means of which a transferable object can be loaded into a cargo space of a transfer vehicle more easily. The characteristic features of a transfer vehicle according to the invention are set out in the attached patent claim 1, the characteristic features of a system according to the invention are set out in the attached patent claim 12, and the characteristic features of a method according to the invention are set out in the attached patent claim 22.

The transfer vehicle according to the invention for transferring a transferable object weighing 2-50 t, preferably 3-30 t, includes a frame, a cargo space attached to the frame for the transferable object to be loaded onto the transfer vehicle, wheels suspended in the frame for supporting the frame on a substrate, and lifting means for lowering the cargo space in order to transfer the transferable object into the cargo space. The suspension of a wheel comprises a supporting arm with a first end and a second end, wherein the wheel is attached in an articulated manner to the first end, and wherein the second end is attached in an articulated manner to the frame, a height adjustment cylinder with a first end and a second end, wherein the first end is attached in an articulated manner to the frame, a damping element with a first end and a second end, wherein the first end is attached in an articulated manner to the first end of the supporting arm, i.e. the first end of the damping element is mechanically connected to the wheel, a linking element with a first support point, a second support point and a third support point, wherein the second end of the height adjustment cylinder is attached in an articulated manner to the first support point of the linking element, the second end of the damping element is attached in an articulated manner to the second support point of the linking element, and the linking element is attached in an articulated manner by the third support point to the supporting arm.

With the transfer vehicle according to the invention, an adjustment of a height of the cargo space can be realized in an improved manner, so that the cargo space can be lowered to a lower position for loading a transferable object, such as a battery pack or a drill rig, into the cargo space of the transfer vehicle. Transfer vehicles according to the prior art often do not comprise any kind of damping element while with the solution according to the invention it is possible to arrange a damping element and a height adjustment cylinder in the suspension of a wheel. It is essential for the invention that the damping element and the height adjustment cylinder are two separate components. For example, the use of a hydraulic damping element equipped with a pressure battery as a height adjustment cylinder leads to thermal issues which can be resolved with the design according to the invention. By using two separate components, the damping element and the height adjustment cylinder can be dimensioned more freely.

A transfer vehicle here can mean a self-propelled motorized vehicle or a trailer that can be attached to a separate towing vehicle.

The transfer vehicle is a transfer vehicle suitable for the mining industry that is configured to transfer heavy objects weighing 2-50 t, preferably 3-30 t, which defines the requirements for the design of the transfer vehicle and in particular the design of the suspension of a wheel. Preferably, the cargo space of a transfer vehicle according to the invention is 3-8 m long and 3-6 m wide. A diameter of the wheels can be 80-150 cm. A weight of the transport vehicle on its own can be 5-20 tn, 8-12 tn.

A length of the height adjustment cylinder can be 120-180 %, preferably 140-160 %, of a length of the damping element. This provides a range of action with a sufficient latitude for an adjustment of a height of the cargo space.

In one embodiment of the invention, the frame comprises a first end and a second end, which are joined together by an articulated joint, and the transfer vehicle further comprises second wheels arranged in the first end of the frame, and the wheels and the cargo space are arranged in the second end of the frame. In other words, the transfer vehicle can thus have front wheels and rear wheels, wherein the suspension of the rear wheels comprises a solution according to the invention for lowering and raising the cargo space. Thanks to the articulated joint, the transfer vehicle is thus frame-steerable.

In one embodiment of the invention, the transfer vehicle comprises a power unit, preferably arranged in the first end of the frame, for transmitting power to the second wheels in order to move the transfer vehicle in a self-propelled manner. The transfer vehicle is thus able to move autonomously and does not require a separate towing vehicle. By arranging the power unit in the front frame and the cargo space in the rear frame, the weight of the transfer vehicle is more evenly distributed when a heavy transferable object is being transported in the cargo space, so that the power unit arranged in the front frame balances out the whole.

In another embodiment of the invention, the transfer vehicle is a trailer without a power unit. In this case, the transfer vehicle needs a separate towing vehicle to pull the trailer.

In one embodiment of the invention, the linking element is attached in an articulated manner by the third support point between the first end and the second end of the supporting arm, preferably to a central part of the supporting arm. This makes it possible to use a longer lifting cylinder, so that a height of the cargo space can be adjusted over a wider range. This also enables a structural durability of the suspension for the transfer of heavy objects.

Preferably, the linking element is a separate element from the supporting arm and the frame and is supported by the height adjustment cylinder, the damping element and the supporting arm.

Preferably, the linking element is triangular and each support point is located at each corner of the linking element. The linking element is thereby mechanically robust and geometrically suited to the suspension.

Preferably, the first support point, the second support point and the third support point of the linking element are at a fixed distance from one another. In other words, the linking element is structurally rigid. This gives the supporting element and thus the suspension of the wheel the structural strength to withstand a load caused by a heavy transferable object.

The frame can comprise a first attachment point and a second attachment point, and the first end of the height adjustment cylinder can be attached in an articulated manner to the first attachment point, and the second end of the supporting arm can be attached in an articulated manner to the second attachment point, wherein a distance is provided between the first attachment point and the second attachment point. This allows the height adjustment cylinder and the supporting arm to be securely attached to the frame at the different attachment points, so that the height adjustment cylinder and the damping element can be of different lengths.

The frame can comprise an attachment element with a first attachment point and a second attachment point, and the first end of the height adjustment cylinder can be attached in an articulated manner to the first attachment point, and the second end of the supporting arm can be attached in an articulated manner to the second attachment point, wherein the distance between the first attachment point and the second attachment point constitutes the distance. This allows the first attachment point and the second attachment point to be provided in the frame preferably by means of a separate attachment element.

A distance between the first attachment point and the second attachment point can be 20-80%, preferably 30-70%, of a distance between the first end and the second end of the height adjustment cylinder. A greater length can thereby be provided in the suspension for the height adjustment cylinder.

The damping element can be a mechanical, hydraulic or pneumatic element and the height adjustment cylinder can be a hydraulic or pneumatic cylinder. The desired mechanical effect can thereby be achieved in the suspension of the wheel with the damping element and the height adjustment element.

Preferably, the supporting arm is essentially horizontal in a designated position. In other words, the angle of the supporting arm relative to the substrate changes with the movement of the suspension, but in the designated suspension position the first end and the second end of the supporting arm are at the same distance from the substrate. The attachment point of the wheel can thus be provided in the frame at a distance in a horizontal direction from the attachment point of the suspension, so that a vertical movement with a sufficient range can be readily provided for the cargo space.

Preferably, the third support point of the linking element is closest to the substrate in a height direction. In other words, the height adjustment cylinder and the damping element are thus attached to the support points of the linking element that lie above the third support point attached to the supporting arm in a height direction.

A system according to the invention for loading a transferable object into a cargo space of a transfer vehicle includes a transferable object, a transfer vehicle comprising a frame, a cargo space attached to the frame for a transferable object to be loaded onto the transfer vehicle, wheels suspended in the frame for supporting the frame on a substrate, lifting means for lowering the cargo space in order to transfer the transferable object into the cargo space, wherein in the system the transferable object comprises legs on which the transferable object is configured to stand on the substrate so that an empty space remains between the transferable object and the substrate in which a clearance between the transferable object and the substrate is provided, the cargo space of the transfer vehicle is configured to be lowered by the lifting means to an intermediate position in which a height of the cargo space from the substrate is less than a clearance between the transferable object and the substrate, so that the cargo space can be placed between the transferable object and the substrate, and the cargo space is configured to be lifted by the lifting means into an upper position in which a height of the cargo space from the substrate is greater than a clearance between the transferable object and the substrate, so that the cargo space can raise the legs of the transferable object off the substrate. The cargo space is configured to receive the transferable object in such a manner that the cargo space comprises a slot configured to receive at least one leg of the transferable object and at least one leg of the transferable object is configured to remain outside the cargo space of the transfer vehicle when the transferable object is loaded on board the transfer vehicle.

In the system according to the invention, a loading of the transferable object into the cargo space of the transfer vehicle as well as an unloading of the transferable object from the cargo space of the transfer vehicle can be carried out in a controlled and autonomous manner. The system does not comprise additional moving parts, such as cranes, but rather a static transferable object can be loaded onto the transfer vehicle merely by altering the height and position of the cargo space of the transfer vehicle. It is thereby easier to transfer, for example, battery units from a charging station to a drill rig and back than before.

The cargo space of a transfer vehicle is realized in a structurally robust manner when a slot is arranged in the cargo space which is configured to receive at least one leg of the transferable object and by leaving a part of the legs outside the cargo space in a particularly surprising manner, so that the transfer vehicle is particularly suitable for moving heavy objects.

A common feature of the transferable objects of the system according to the invention is that, regardless of the transferable object in question, the transferable object is always arranged on a structurally integrated or detachable base structure which comprises the legs described in the foregoing. When resting on a substrate outside the transfer vehicle, the transferable object remains firmly upright on the legs. The transfer vehicle can be configured to receive different types of transferable objects which, however, are uniform in their base structure, i.e. they always comprise legs that are compatible with the cargo space of the transfer vehicle.

The transferable object preferably comprises three legs. This allows the transferable object to remain firmly upright on the legs when resting on a substrate.

Preferably, the slot in the cargo space of the transfer vehicle is configured to receive one leg of the transferable object. This allows the cargo space of the transfer vehicle to be placed under the transferable object so that the centre of gravity of the transferable object is over the cargo space. The cargo space of a transfer vehicle is realized in a structurally robust manner when only one slot configured to receive a leg of the transferable object is arranged in the cargo space, so that the transfer vehicle is particularly suitable for moving heavy objects.

Preferably, the other legs of the transferable object are arranged so as to remain outside the cargo space of the transfer vehicle. The cargo space thus does not need not to comprise a slot or some analogous structure that compromises the mechanical strength of the cargo space to receive all legs of the transferable object, but rather the other legs of the transferable object can be surprisingly left outside the cargo space while at least one leg is arranged in the slot. The centre of mass of the transferable object lies over the cargo space of the transfer vehicle during transport, so that the transferable object remains in the cargo space by the force of gravity.

In an alternative embodiment, the transfer vehicle does not comprise the slot described in the foregoing, but rather all legs of the transferable object are arranged so as to remain outside the cargo space. This allows a mechanically simple cargo space.

Preferably, the slot extends in a continuous manner a selected distance from the rear edge of the transfer vehicle, which distance constitutes at most 50% of the length of the cargo space. The transfer vehicle is thereby structurally strong as the slot does not extend over the entire length of the cargo space.

Preferably, the at least one leg of the transferable object to be arranged in the slot is arranged underneath the transferable object at a distance from the edge of the transferable object. It is thereby possible to make the slot shorter while it is still possible to arrange the centre of mass of the transferable object over the cargo space.

In other words, a leg arranged underneath the transferable object here means that the leg, when viewed from above, is inside the outer edges of the transferable object and thus remarkably close to the centre of mass of the transferable object. A distance of this leg from the centre of mass of the transferable object can be 5-45%, preferably 10-30%, of a length and/or width of the transferable object.

Preferably, two legs of the transferable object are arranged so as to remain outside the cargo space of the transfer vehicle when the transferable object is loaded on board the transfer vehicle. This allows one leg of the three-legged transferable object to be arranged in the slot while the other legs are left outside the cargo space.

Preferably, at least one leg to be arranged outside the cargo space is arranged outside the transferable object at a distance from the edge of the transferable object. A centre of mass of the transferable object can thereby be shifted so as to lie over the cargo space.

In other words, a leg arranged outside the transferable object here means that the leg, when viewed from above, is outside the outer edges of the transferable object and thus at a significant distance from the centre of mass of the transferable object. The distance of this leg from the centre of mass of the transferable object can be 55-150%, preferably 60-100%, of the length and/or width of the transferable object.

Preferably, the cargo space of the transfer vehicle comprises a retaining element, which is configured to prevent the transferable object from sliding in the cargo space when the cargo space of the transfer vehicle is in the upper position and the transferable object is on board the transfer vehicle. The transferable object thus does not need to be tied down on board the vehicle, which saves working time, and also allows the transferable object to be loaded into the cargo space of the transfer vehicle without the presence of a human being.

Preferably, the transfer vehicle of the system is any one of the transfer vehicles described in the foregoing. This allows an advantageous realization of the height adjustment of the cargo space of the transfer vehicle used in the system.

In a method according to the invention for loading a transferable object into a cargo space of a transfer vehicle, a static object is loaded onto a transfer vehicle in order to transfer the object. The transferable object is placed so as to stand on a substrate on legs so that an empty space remains between the transferable object and the substrate in which a clearance between the transferable object and the substrate is provided. The cargo space of the transfer vehicle is lowered by lifting means to an intermediate position in which a height of the cargo space from the substrate is less than a clearance between the transferable object and the substrate, and the cargo space is placed between the transferable object and the substrate. The cargo space is raised by the lifting means to an upper position in which a height of the cargo space from the substrate is greater than a clearance between the transferable object and the substrate, and the cargo space is raised so that the legs of the transferable object are lifted off the substrate. At least one leg of the transferable object is placed in a slot in the cargo space of the transfer vehicle and at least one leg of the transferable object is left outside the cargo space of the transfer vehicle when the transferable object is loaded on board the transfer vehicle.

In the method according to the invention, a loading of the transferable object into the cargo space of the transfer vehicle as well as an unloading of the transferable object from the cargo space of the transfer vehicle can be carried out in a controlled and autonomous manner. It should be noted that the system according to the invention can be used in autonomous transfer vehicles without the presence of a human being as well as to facilitate the operation of a transfer vehicle driven by a human being, so that the transferable object can be loaded into the cargo space without the driver of the transfer vehicle having to leave the cab of the transfer vehicle.

Preferably, any of the systems described in the foregoing are employed in the method. The method can thus be implemented by mechanically operated equipment.

The invention is described in detail in the following with reference to the attached drawings illustrating embodiments of the invention, wherein
- Figure 1a: illustrates a system according to the invention in a situation in which a transferable object is waiting to be loaded into the cargo space of a transfer vehicle,
- Figure 1b: illustrates a system according to the invention in a situation in which a transferable object has been loaded into the cargo space of a transfer vehicle,
- Figure 2a: illustrates the suspension of a wheel of a transfer vehicle according to the invention in a situation in which the cargo space is in the upper position,
- Figure 2b: illustrates the suspension of a wheel of a transfer vehicle according to the invention in a situation in which the cargo space is in the intermediate position,
- Figure 2c: illustrates the suspension of a wheel of a transfer vehicle according to the invention in a situation in which the cargo space is in the lower position,
- Figure 3a: illustrates a first step of a method according to the invention for loading a transferable object into the cargo space of a transfer vehicle,
- Figure 3b: illustrates a second step of a method according to the invention for loading a transferable object into the cargo space of a transfer vehicle,
- Figure 3c: illustrates a third step of a method according to the invention for loading a transferable object into the cargo space of a transfer vehicle,
- Figure 3d: shows a fourth step of a method according to the invention for loading a transferable object into the cargo space of a transfer vehicle,

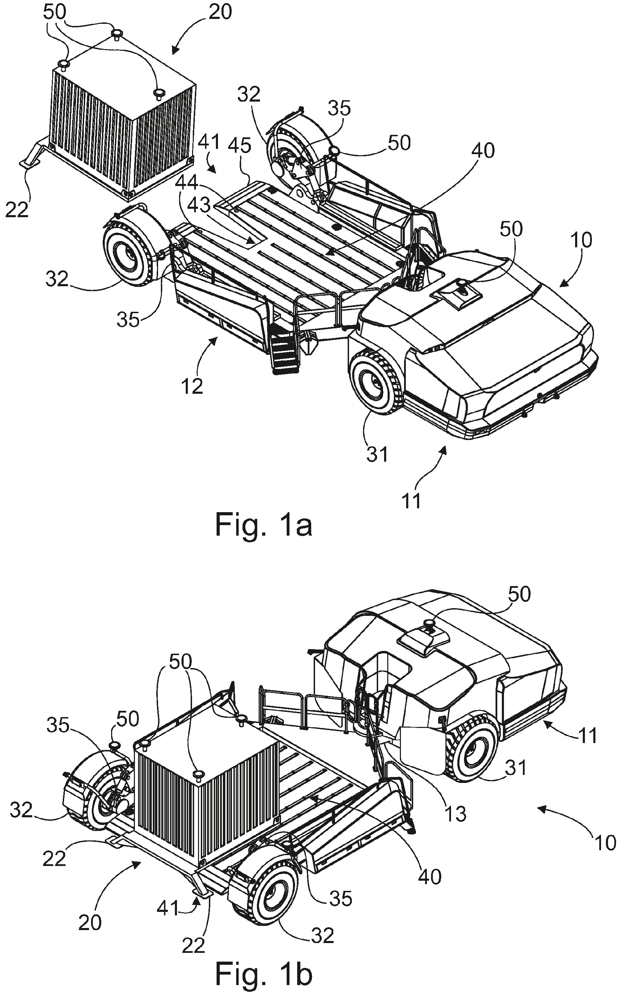

Figure 1a illustrates a transfer vehicle 10 according to the invention for transferring a transferable object (20) weighing 2-50 t, preferably 3-30 t, and a transferable object 20 awaiting transfer, which is a battery pack here. The battery pack is enclosed here by a shipping container provided with three legs or some other analogous three-legged closed structure. In Figure 1b, the transferable object 20 has been loaded into the cargo space 40 of the transfer vehicle 10. The transferable object 20 comprises legs 21, 22, here one front leg 21 and two rear legs 22, on which legs 21, 22 the transferable object 20 is configured to stand on a substrate 100.

The transfer vehicle 10 includes a frame, a cargo space 40 attached to the frame for a transferable object 20 to be loaded onto the transfer vehicle 10, wheels 32 suspended in the frame for supporting the frame on a substrate 100, and lifting means 35 for lowering the cargo space 40 in order to transfer the transferable object 20 into the cargo space 40.

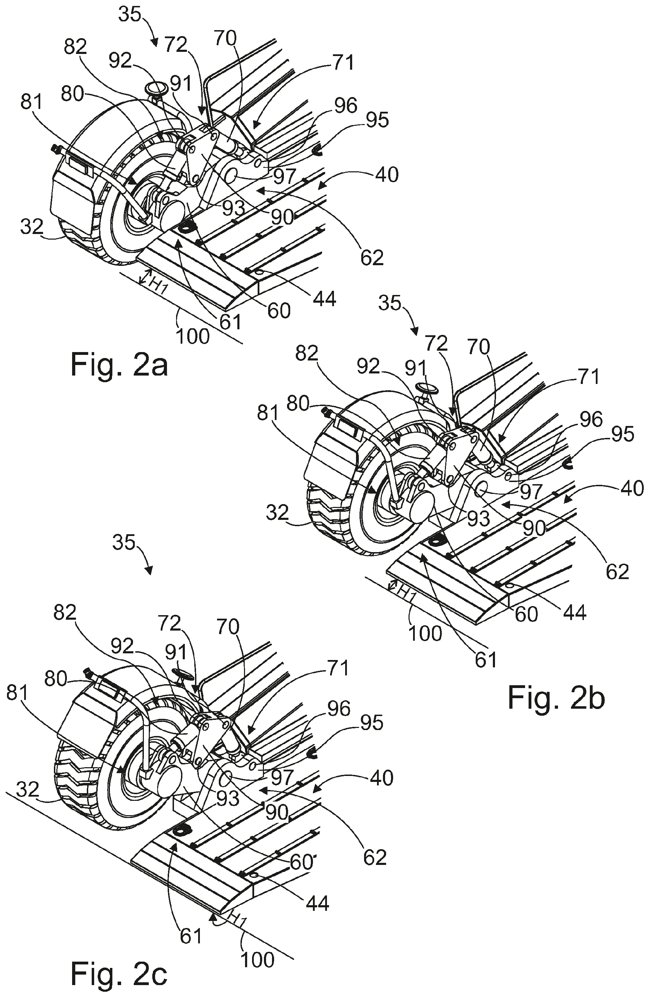

The suspension of the wheels 32 of the transfer vehicle 10 according to the invention and the operation of the suspension are illustrated in more detail in Figures 2a-2c.

The suspension of each wheel 32 here, which constitute the rear wheels of the transfer vehicle 10, comprises a supporting arm 60 with a first end 61 and a second end 62, wherein the wheel 32 is attached in an articulated manner to the first end 61, and wherein the second end 62 is attached in an articulated manner to the frame. The suspension also comprises a height adjustment cylinder 70 with a first end 71 and a second end 72, wherein the first end 71 is attached in an articulated manner to the frame. The suspension further comprises a damping element 80 with a first end 81 and a second end 82, wherein the first end 81 is attached in an articulated manner to the first end 61 of the supporting arm 60. The suspension further has a linking element 90 with a first support point 91, a second support point 92 and a third support point 93. The linking element 90 here is triangular and each support point 91, 92, 93 is located at each corner of the linking element 90. The height adjustment cylinder 70 and the damping element 80 can also be mechanically coupled to each other without a linking element or by means of a linking element of a different shape, but the linking element illustrated here ensures a mechanically robust suspension. The second end 72 of the height adjustment cylinder 70 is attached in an articulated manner to the first support point 91 of the linking element 91, the second end 82 of the damping element 80 is attached in an articulated manner to the second support point 92 of the linking element 90 and the linking element 90 is attached in an articulated manner by the third support point 93 to the supporting arm 60.

In this embodiment, the frame of the transfer vehicle 10 comprises a first end 11 and a second end 12, which are joined together by an articulated joint 13, and the transfer vehicle 10 further comprises second wheels 31 arranged in the first end 11 of the frame, and the wheels 32 and the cargo space 40 are arranged in the second end 12 of the frame. The transfer vehicle 10 comprises a power unit arranged in the first end 11 of the frame for transmitting power to the second wheels 31 in order to move the transfer vehicle 10 in a self-propelled manner.

The linking element 90 here is attached in an articulated manner by the third support point 93 between the first end 61 and the second end 62 of the supporting arm 60 to the central part of the supporting arm 60. The linking element 90 is triangular and each support point 91, 92, 93 is located at each corner of the linking element 90. The first support point 91, the second support point 92 and the third support point 93 of the linking element 90 are at a fixed distance from one another.

The frame here comprises an attachment element 95 with a first attachment point 96 and a second attachment point 97, wherein the first end 71 of the height adjustment cylinder 70 is attached in an articulated manner to the first attachment point 96, and the second end 62 of the supporting arm 60 is attached in an articulated manner to the second attachment point 97, wherein a distance is provided between the first attachment point 96 and the second attachment point 97, which can be, for example, 20-80 %, preferably 30-70 %, of the distance between the first end 71 and the second end 72 of the height adjustment cylinder 70. However, the attachment element 95 is not mandatory and the first attachment point 96 and the second attachment point 97 can be configured as part of the frame.

In this embodiment, the transferable object 20 thus comprises three legs 21, 22**.** The cargo space 40 of the transfer vehicle 10 is configured to receive the transferable object 20 in such a manner that the cargo space 40 comprises a slot 43 configured to receive one leg 21 of the transferable object 20 and the two other legs 22 of the transferable object 20 are configured to remain outside the cargo space 40 of the transfer vehicle 10 when the transferable object 20 is loaded on board the transfer vehicle 10. The number of legs 21, 22 can differ in other embodiments.

The slot 43 extends here in a continuous manner a selected distance from the rear edge of the transfer vehicle 10, which distance constitutes at most 50% of the length of the cargo space 40. The leg (21) of the transferable object 20 to be arranged in the slot 43 is arranged underneath the transferable object 20 at a distance from the edge of the transferable object 20, which distance can be 5-45%, preferably 10-30%, of a length and/or width of the transferable object. The legs 22 to be arranged outside the cargo space 40 are arranged outside the transferable object 20 at a distance from the edge of the transferable object 20, which distance can be 55%-150%, preferably 60%-100%, of a length and/or width of the transferable object.

The cargo space 40 of the transfer vehicle 10 here comprises a retaining element 44, which is configured to prevent the transferable object 20 from sliding in the cargo space 40 when the cargo space 40 of the transfer vehicle 10 is in the upper position and the transferable object 20 is on board the transfer vehicle 10. The retaining element 44 here is a circular opening, the cargo space 40 potentially having multiple retaining elements 44. The transferable object 20 has a cone corresponding to the opening or some other matching element 24 that can interlock with the retaining element. When a transferable object is loaded into the cargo space 40, the cargo space 40 is placed underneath the transferable object 20 so that the front leg 21 is driven to the back of the slot 44, so that the matching elements 24 are placed over the retaining elements 44. When the cargo space 40 is raised, the matching elements 24 slide into the retaining elements 44.

The transfer vehicle 10 and the transferable object 20 here further comprise geopositioning means for determining a position of the transfer vehicle 10 and of the transferable object 20. The geopositioning means here respectively comprise three geopositioning devices 50 for determining a position and an orientation of the transfer vehicle 10 and the transferable object 20. The geopositioning devices here are satellite geopositioning devices, more specifically GPS geopositioning devices. Each geopositioning device 50 comprises a satellite geopositioning antenna, here a GPS antenna.

The transfer vehicle 10 can comprise a guidance system for guiding the transfer vehicle 10 based on positional data provided by the geopositioning means and route points entered into the guidance system. The geopositioning means here comprises the satellite geopositioning devices 50, which are in communication with satellites in order to determine the position of the vehicle 20**.**

The guidance system of the transfer vehicle 10 can also use a separate satellite geopositioning station in order to generate a geopositioning corrective signal in order to improve a precision of the geopositioning means of the transfer vehicle 10. A position of the route points and of the transfer vehicle 10 can thereby be determined with a precision of up to **+**/- 2 cm**.** It is also possible to employ an RTK positioning here, which uses a carrier wave to determine a position. The satellite geopositioning station in this case is in communication with satellites via a geopositioning antenna and transmits the carrier wave to the geopositioning means of the transfer vehicle 10 via a transmitting antenna.

The transfer vehicle 10 can comprise a minimum of two geopositioning devices 50 with which a position and an orientation of the transfer vehicle 10 can be determined, but in this case a 180-degree error is possible in the orientation of the transfer vehicle 10. It is also possible to provide more than three geopositioning devices 50**.**

The transfer vehicle 10 can thus operate using the geopositioning means to load the transferable object into the cargo space 40 entirely autonomously in such a manner that the position and the orientation of the transferable object 20 is determined by the geopositioning means, the transfer vehicle 10 is subsequently guided autonomously to the transferable object 20 and the method according to the invention for loading a transferable object is carried out in a fully autonomous manner without the presence of a human being.

The cargo space 40 can also be placed by the lifting means 35 in a lower position (Figure 2c) in which a ramp 45 located at the rear edge of the cargo space 40 is in contact with the substrate 100. In an intermediate position, which is used for loading a static transferable object, a height H1 of the cargo space 40 from the substrate 100 must be non-zero in order for the transfer vehicle 10 to be able to move in the intermediate position. In the lower position, on the other hand, the height H1 can be zero. In this lower position, it is easy to load a mobile transferable object supported by wheels or tracks on the substrate into the cargo space 40. The same transfer vehicle 10 can consequently also be used to transfer, for example, tracked drill rigs or other vehicles.

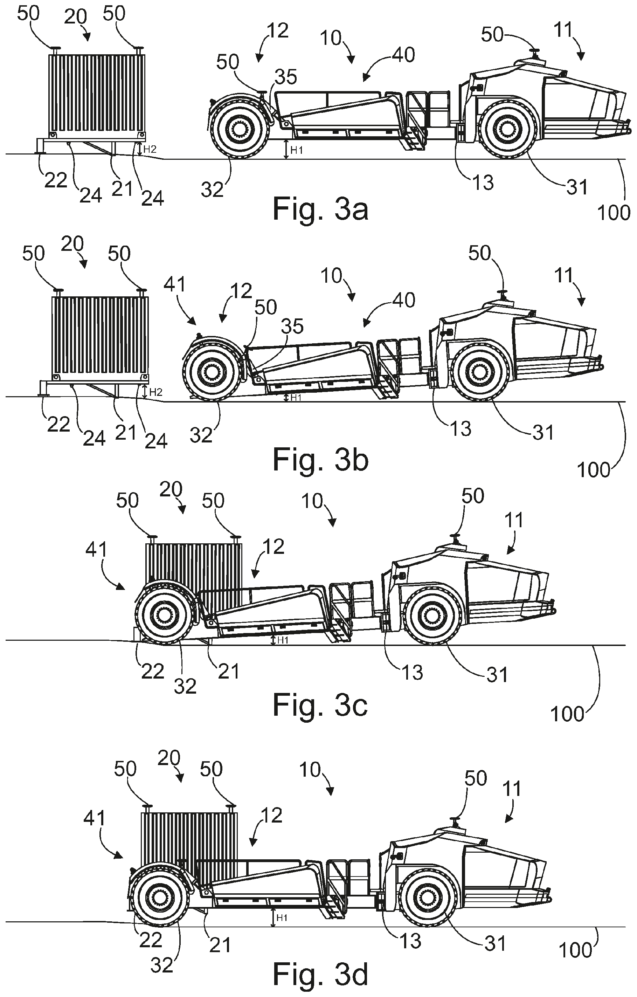

Figures 3a-3d illustrate steps of the method according to the invention in which a transferable object 20 is loaded into the cargo space 40 of a transfer vehicle 10.

In a first step of the method, in Figure 3a, the transfer vehicle 10 is driven next to the transferable object 20 so that the rear edge 41 of the cargo space 40 of the transfer vehicle 10 points towards the transferable object 20. The transferable object 20 stands on the substrate 100 on legs 21, 22 so that an empty space remains between the transferable object 20 and the substrate 100 in which a clearance H2 between the transferable object 20 and the substrate 100 is provided. The cargo space is in the upper position here, so that a height H1 of the cargo space 40 from the substrate 100 is greater than a clearance H2 between the transferable object 20 and the substrate 100.

In a second step of the method, in Figure 3b, the cargo space 40 of the transfer vehicle 10 is lowered by the lifting means 35 to an intermediate position in which a height H1 of the cargo space 40 from the substrate 100 is less than a clearance H2 between the transferable object 20 and the substrate 100.

In a third step of the method, in Figure 3c, the transfer vehicle 10 is reversed under the transferable object 20, i.e**.** into the gap between the object 20 and the substrate 100 to a point where the front leg 21 of the transferable object 20 touches the back of the slot 45, so that the matching elements 24 in the bottom of the transferable object 20 are vertically aligned with the restraining elements 44.

In a fourth step of the method, in Figure 3d, the cargo space 40 of the transfer vehicle 10 is raised by the lifting means 35 to an upper position in which a height H1 of the cargo space 40 from the substrate 100 is greater than a clearance H2 between the transferable object 20 and the substrate 100, and the cargo space 40 is raised so that the legs 21, 22 of the transferable object 20 are lifted off the substrate 100. The transferable object 20 thereby remains static in the cargo space 40 while the centre of gravity of the transferable object 20 is over the cargo space 40**.** The rear legs 22 of the transferable object 20 and consequently part of the mass of the transferable object 20 remain outside the cargo space 40. The transferable object 20 is locked laterally in place by the restraining elements 44.

## Claims

1. A system for loading a transferable object (20) weighing 2-50 t, preferably 3-30 t into a cargo space (40) of a transfer vehicle (10), wherein the system includes
- a transferable object (20),
- a transfer vehicle (10) comprising
- a frame
- a cargo space (40) attached to the frame for a transferable object (20) to be loaded onto the transfer vehicle (10),
- wheels (32) suspended in the frame for supporting the frame on a substrate (100),
- lifting means (35) for lowering the cargo space (40) in order to transfer the transferable object (20) into the cargo space (40),
wherein in the system
- the transferable object (20) comprises legs (21, 22) on which the transferable object (20) is configured to stand on the substrate (100) so that an empty space remains between the transferable object (20) and the substrate (100) in which a clearance (H2) between the transferable object (20) and the substrate (100) is provided,
- the cargo space (40) of the transfer vehicle (10) is configured to be lowered by the lifting means (35) to an intermediate position in which a height (H1) of the cargo space (40) from the substrate (100) is less than a clearance (H2) between the transferable object (20) and the substrate (100), so that the cargo space (40) can be placed between the transferable object (20) and the substrate (100),
- the cargo space (40) is configured to be raised by the lifting means (35) to an upper position in which a height (H1) of the cargo space (40) from the substrate (100) is greater than a clearance (H2) between the transferable object (20) and the substrate (100), so that the cargo space (40) can raise the legs (21, 22) of the transferable object (20) off the substrate (100), and
- the cargo space (40) is configured to receive the transferable object (20) in such a manner that the cargo space (40) comprises a slot (43) configured to receive at least one leg (21, 22) of the transferable object (20) and at least one leg (21, 22) of the transferable object (20) is configured to remain outside the cargo space (40) of the transfer vehicle (10) when the transferable object (20) is loaded on board the transfer vehicle (10),
**characterized in that**
the lifting means (35) are adapted to the suspension system of the wheels (32),
at least one leg (21) of the transferable object (20) to be arranged in the slot (43) is arranged underneath the transferable object (20) at a distance from the edge of the transferable object (20), and the distance of this leg (21) from the centre of mass of the transferable object (20) is 5-45 % of a length and/or width of the transferable object (20), and the at least one leg (22) to be arranged outside the cargo space (40) is arranged outside the transferable object (20) at a distance from the edge of the transferable object (20), and the distance of this leg (22) from the centre of mass of the transferable object (20) is 55-150 % of the length and/or width of the transferable object (20).

2. The system according to claim 1, **characterized in that** the transferable object (20) comprises three legs (21, 22).

3. The system according to claim 1 or 2, **characterized in that** the slot (43) of the cargo space (40) of the transfer vehicle (10) is configured to receive one leg (21) of the transferable object (20).

4. The system according to claim 3, **characterized in that** the other legs (22) of the transferable object (20) are configured to remain outside the cargo space (40) of the transfer vehicle (10).

5. The system according to any one of claims 1-4, **characterized in that** the slot (43) extends in a continuous manner a selected distance from the rear edge of the transfer vehicle (10), which distance constitutes at most 50% of the length of the cargo space (40).

6. The system according to any one of claims 1-5, **characterized in that** two legs (21, 22) of the transferable object (20) are configured to remain outside the cargo space (40) of the transfer vehicle (10) when the transferable object (20) is loaded on board the transfer vehicle (10).

7. The system according to any one of claims 1-6, **characterized in that** the cargo space (40) of the transfer vehicle (10) comprises a retaining element (44), which is configured to prevent the transferable object (20) from sliding in the cargo space (40) when the cargo space (40) of the transfer vehicle (10) is in the upper position and the transferable object (20) is on board the transfer vehicle (10).

8. The system according to any one of claims 1-7, **characterized in that** the suspension of a wheel (32) comprises
- a supporting arm (60) with a first end (61) and a second end (62), wherein the wheel (32) is attached in an articulated manner to the first end (61), and wherein the second end (62) is attached in an articulated manner to the frame,
- a height adjustment cylinder (70) with a first end (71) and a second end (72), wherein the first end (71) is attached in an articulated manner to the frame,
- a damping element (80) with a first end (81) and a second end (82), wherein the first end (81) is attached in an articulated manner to the first end (61) of the supporting arm (60),
- a linking element (90) with a first support point (91), a second support point (92) and a third support point (93), wherein the second end (72) of the height adjustment cylinder (70) is attached in an articulated manner to the first support point (91) of the linking element (91), the second end (82) of the damping element (80) is attached in an articulated manner to the second support point (92) of the linking element (90), and the linking element (90) is attached in an articulated manner by the third support point (93) to the supporting arm (60).

9. A method for loading a transferable object (20) weighing 2-50 t, preferably 3-30 t into a cargo space (40) of a transfer vehicle (10), in which method a static transferable object (20) is loaded onto a transfer vehicle (10) in order to transfer the object (20), which method comprises the following steps
- the transferable object (20) is placed so as to stand on a substrate (100) on legs (21, 22) so that an empty space remains between the transferable object (20) and the substrate (100) in which a clearance (H2) between the transferable object (20) and the substrate (100) is provided,
- the cargo space (40) of the transfer vehicle (10) is lowered by lifting means (35) to an intermediate position in which a height (H1) of the cargo space (40) from the substrate (100) is less than a clearance (H2) between the transferable object (20) and the substrate (100), and the cargo space (40) is placed between the transferable object (20) and the substrate (100), and
- the cargo space (40) is raised by the lifting means (35) to an upper position in which a height (H1) of the cargo space (40) from the substrate (100) is greater than a clearance (H2) between the transferable object (20) and the substrate (100), and the cargo space (40) is raised so that the legs (21, 22) of the transferable object (20) are lifted off the substrate (100),
- at least one leg (21, 22) of the transferable object (20) is placed in a slot (43) in the cargo space (40) of the transfer vehicle (10) and at least one leg (21, 22) of the transferable object (20) is left outside the cargo space (40) of the transfer vehicle (10) when the transferable object (20) is loaded on board the transfer vehicle (10).
**characterized in that**
the cargo space (40) is lowered and raised by the lifting means (35) adapted to the suspension system of the wheels (32),
at least one leg (21) of the transferable object (20) placed in the slot (43) is arranged underneath the transferable object (20) at a distance from the edge of the transferable object (20), and the distance of this leg (21) from the centre of mass of the transferable object (20) is 5-45 % of a length and/or width of the transferable object (20), and
the at least one leg (22) left outside the cargo space (40) is arranged outside the transferable object (20) at a distance from the edge of the transferable object (20), and the distance of this leg (22) from the centre of mass of the transferable object (20) is 55-150 % of the length and/or width of the transferable object (20).

10. The method according to claim 9, **characterized in that** a system according to any one of claims 1-8 is employed in the method.
